# EUROPEAN PATENT SPECIFICATION

(11) **EP 1 297 769 B1**
(45) Date of publication and mention of the grant of the patent: **04.04.2007**
(21) Application number: 02078860.0
(22) Date of filing: 11.09.2002
(51) Int. Cl.: A47J 43/14, A23J 1/09, G01N 21/47

(54) **Separation apparatus for separating egg white and egg yolk**
Trennvorrichtung für das Trennen von Eiweiss und Eigelb
Dispositif pour la séparation du blanc et du jaune d'un oeuf

(30) Priority: 01.10.2001 NL 1019077
(43) Date of publication of application: 02.04.2003
(73) Proprietor: Coenraadts Machinefabriek B.V., 1505 HK Zaandam (NL)
(72) Inventor: Coenraadts, Jacobus Willem Karel, 1511 GC Oostzaan (NL)
(74) Representative: Van Breda, Jacobus

(56) References cited:
- EP-A- 0 547 787
- EP-A- 1 205 140
- DE-A- 19 548 692
- NL-C- 1 010 910
- US-A- 4 269 516

## Description

The invention relates to a separation device for separating egg white and egg yolk of eggs from which the shell has been removed, comprising at least one product trough for egg white, one detection system comprising a light source and a light sensor for the detection of contamination in the egg white in the product trough and a valve, which in reaction to the detection system in a first position guides contaminated egg white to a discharge trough and in a second position guides non-contaminated egg white to a collecting trough.

Such a separation device is known from the German *Offenlegungsschrift* DE-A-195 48 692.

In the known separation device a horizontally arranged product trough is employed, which near its end is provided with a valve in the form of sealable openings in the product trough. The first opening as viewed in the direction of product flow is activated when the detection system detects a contamination in the egg white supplied. The detection system is provided with a plurality of light sources arranged under the product trough, which are detected with the aid of a CCD camera arranged above the product trough. The light signals detected by the CCD camera are interpreted in order to decide how the valve is to be controlled so as to prevent any contaminated product from entering the collecting through for the egg white.

The object of the invention is to provide a separation device of the kind referred to in the preamble with which a precise and reliable separation of egg white and egg yolk can be carried out.

To this end the separation device according to the invention is characterized in that for each product trough the detection system is provided with a light source capable of emitting visible light and that the light sensor is capable of detecting light coming from the product in the product trough, whereby the light source and the light sensor are disposed parallel to, and behind one another, and the light source and the light sensor are provided under the product trough. Such an arrangement prevents the light from the light source reaching the light sensor directly.

Surprisingly, it was shown that with such a detection system it is possible to perform a very reliable and unambiguous examination of the product egg white, so that contamination of the egg white can be effectively detected and such contaminated egg white can be prevented from entering the collecting trough.

It was moreover shown that the reliable and unambiguous detection of such contaminations was aided by substantially embodying the device in the colour blue.

Preferably the product trough is provided with a window that is transparent for the light of the light source. An advantage is that such positioning of the light source and light sensor under a window incorporated in the product trough allows the light sensor to be placed closely to the product to be examined, so as to greatly reduce the influence of scattered light.

Desirably the product trough is formed in such a way that during use the window in the product trough is continuously carrying egg white product. This benefits the reliability of the light sensor's detection of contaminations.

It is further desirable for a spraying device to be placed above the product trough for cleaning the window. When a considerable contamination is detected, this makes it possible to simply and effectively remove any residual material.

A particular aspect of the invention relates to the measure of the light source and the light sensor placed behind it being directed at the product trough at an angle of 30°-60°. Such positioning prevents the undesirable influence of reflected light that originates from the light source.

In order to achieve an effective and precise separation of the uncontaminated egg white and the contaminated egg white it is further desirable for the valve to be embodied as a guide channel, which in a first position immediately succeeds the product trough and discharges in or above the discharge trough, and which guide channel is in a second position swivelled away from the product trough such that the product trough discharges in the collecting trough. Such a valve makes it possible to obtain a very fast reaction to detected contaminations in the product trough, and thus effectively prevents the contamination reaching the collecting trough for the egg white.

The fact that the light sensor is preferably placed near the transition from the product trough to the guide trough or collecting trough, respectively, further contributes to this.

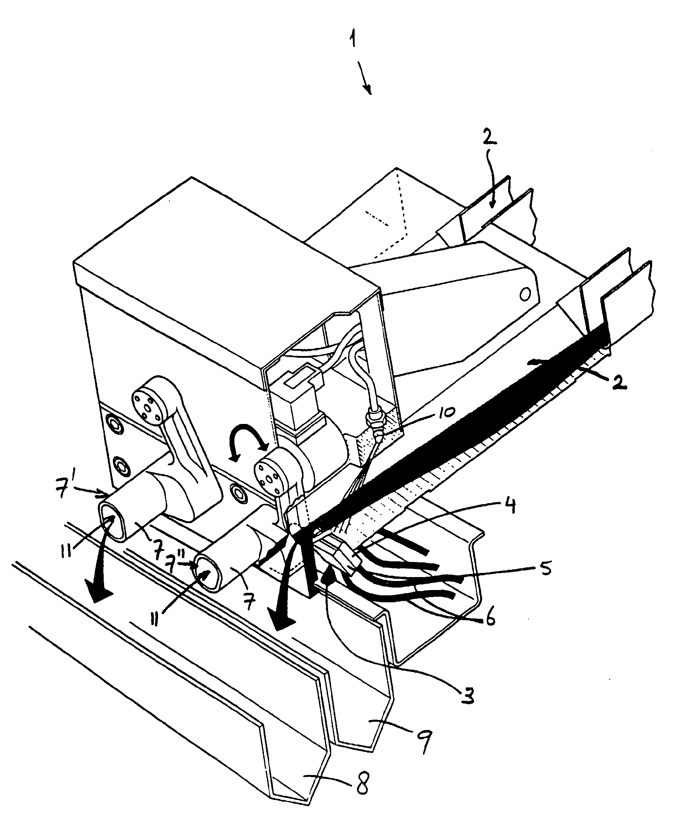

In the following the invention will be further explained with reference to a non-limited exemplary embodiment and with reference to the drawing.

The only figure in the drawing shows a part of the separation device according to the invention, namely the part where the egg white product flows out of the product trough.

The separation device 1 according to the invention serves for the separation of egg white from egg yolk of eggs from which the shell has been removed, in a manner such as to obtain a purest possible egg white product.

To this end the separation device 1 as a rule comprises several product troughs 2. These product troughs contain the egg white product that is substantially free of contamination. The invention discussed here serves to remove the last residual contamination that may be present from the egg white stream contained in every product trough 2. To this end a detection system 3 is used of which a light source 4 and a light sensor 5 are part. The light source 4 and the light sensor 5 may be connected with the other processing equipment by means of, for example, glass fibre cables 6. The light sensor 5 serves for the detection of a possible contamination in the egg white in the product trough 2 at which this light sensor 5 is positioned. Depending on this a valve 7 is activated, which in a first position 7' guides contaminated egg white to a discharge trough 8 and in a second position 7'' guides non-contaminated egg white to a collecting trough 9 for the egg white. It is of course also possible to exchange the functions of the discharge trough 8 and the collecting trough 9.

Desirably each product trough 2 is embodied with a separate detection system 3. According to the invention, the detection system 3 has a light source 4 capable of emitting visible light. For this purpose it is possible to use, for example a (halogen) lamp, the light of which is filtered appropriately. The light source may be located at some distance from the product trough 2, with the glass fibre 6 serving to conduct this light to the vicinity of product trough 2.

The detection system 3 is further embodied with a light sensor 5 equipped for detecting light coming from the product in the product trough 2, substantially in the same wavelength range as the one emitted by the light source 4.

Although this cannot be seen from the drawing, the colour of the device 1 is preferably blue for the reason that this aids the reliable and precise detection of contaminations in the product in the product trough 2.

However, the figure does clearly show that - viewed in the direction of the product stream - the light source 4 and the light sensor 5 are preferable arranged behind one another and under the product trough 2. The light sensor 5 is preferably arranged behind and parallel to the light source 4. The product trough 2 is transparent or is provided with a window which is transparent for the light from the light source 4. This is quite obvious to the person skilled in the art so that it is not further shown in the figure. A grey surface in the product trough 2 shown in the foreground represents the fact that the product trough 2 is formed such that during use, the window in the product trough continuously carries egg white product. The figure further shows a spraying device 10 provided above the product trough 2 for cleaning the window under which the detection system 3 is located.

An important aspect of the invention is further that in order to avoid undesirable reflections that might be detected by the light sensor 5, the light source 4 and the light sensor 5 are directed at the product trough 2 at an angle of approximately 30°-60°.

A further important aspect of the invention is that the valve 7 is embodied as a guide channel 11, which in a first position 7' directly succeeds the product trough 2 and discharges in or above the discharge trough 8. In the second position 7" the guide channel is swivelled away from the product trough 2 such that said product trough 2 discharges above the collecting trough 9.

Finally, the figure clearly shows that the light sensor 3 is positioned near the discharge of the product trough 2, where the product trough 2 runs into guide trough 11 or collecting trough 9, respectively.

Although the invention is explained with reference to the specific exemplary embodiment shown in the figure, the essence of the invention is not limited to this specific embodiment. The protective scope merited by the invention therefore is not determined by the exemplary embodiment shown but rather by the appended claims, the foregoing merely serving as elucidation.

## Claims

1. A separation device (1) for separating egg whites and egg yolks of eggs from which the shell has been removed, comprising at least one product trough (2) for egg white, one detection system (3) comprising a light source (4) and a light sensor (5) for the detection of a contamination in the egg white in the product trough (2) and a valve (7), which in reaction to the detection system (3) in a first position (7')guides contaminated egg white to a discharge trough (8) and in a second position (7'') guides non-contaminated egg white to a collecting trough (9), whereby for each product trough (2) the detection system (3) is provided with a light source (4) capable of emitting visible light and that the light sensor (5) is capable of detecting light coming from the product in the product trough (2), **characterized in that** the light source (4) and the light sensor (5) are disposed parallel to, and behind one another, and that the light source (4) and the light sensor (5) are provided under the product trough.

2. A separation device according to claim 1, **characterized in that** the product trough is provided with a window that is transparent for the light of the light source (4).

3. A separation device according to claim 1 or 2, **characterized in that** the product trough is formed in such a way that during use the window in the product trough is continuously carrying egg white product.

4. A separation device according to one of the preceding claims, **characterized in that** a spraying device is placed above the product trough for cleaning the window.

5. A separation device according to one of the claims 1-4, **characterized in that** the light source (4) and the light sensor (5) placed behind it are directed at the product trough at an angle of 30°-60°.

6. A separation device according to one of the preceding claims, **characterized in that** the valve is embodied as a guide channel (11), which in a first position (7') directly succeeds the product trough (2) and discharges in or above the discharge trough (8), and in the second position (7'') said guide channel (11) is swivelled away from the product trough (2) such that the product trough discharges above the collecting trough.

7. A separation device according to claim 6, **characterized in that** the light sensor is positioned near where the product trough runs into guide trough (11) or collecting trough (9), respectively.

8. A separation device according to one of the preceding claims, **characterized in that** the colour of the same is substantially blue.

## Patentansprüche

1. Trennvorrichtung (1) zum Trennen von Eiweiß und Eigelb von Eiern, von welchen die Schale entfernt wurde, umfassend zumindest eine Produktmulde (2) für Eiweiß, ein Erfassungssystem (3) das eine Lichtquelle (4) und einen Lichtsensor (5) zum Erfassen einer Kontamination in dem Eiweiß in der Produktmulde (2) und ein Ventil (7) aufweist, das als Reaktion auf das Erfassungssystem (3) in einer ersten Position (7') kontaminiertes Eiweiß zu einer Entlademulde (8) und in einer zweiten Position (7") nicht kontaminiertes Eiweiß zu einer Sammelmulde (9) führt, wobei das Erfassungssystem (3) für jede Produktmulde (2) mit einer Lichtquelle (4) versehen ist, die sichtbares Licht senden kann, und wobei der Lichtsensor (5) das Licht, das von dem Produkt in der Produktmulde (2) kommt, erfassen kann, **dadurch gekennzeichnet, dass** die Lichtquelle (4) und der Lichtsensor (5) parallel zueinander und hintereinander angeordnet sind, und dass die Lichtquelle (4) und der Lichtsensor (5) unter der Produktmulde bereitgestellt sind.

2. Trennvorrichtung nach Anspruch 1, **dadurch gekennzeichnet, dass** die Produktmulde mit einem Fenster versehen ist, das für das Licht der Lichtquelle (4) durchsichtig ist.

3. Trennvorrichtung nach Anspruch 1 oder 2, **dadurch gekennzeichnet, dass** die Produktmulde derart ausgebildet ist, dass das Fenster in der Produktmulde während des Gebrauchs ständig Eiweißprodukt trägt.

4. Trennvorrichtung nach einem der vorhergehenden Ansprüche, **dadurch gekennzeichnet, dass** eine Sprühvorrichtung über der Produktmulde zum Reinigen des Fensters angeordnet ist.

5. Trennvorrichtung nach einem der Ansprüche 1 bis 4, **dadurch gekennzeichnet, dass** die Lichtquelle (4) und der Lichtsensor (5), der hinter ihr platziert ist, zu der Produktmulde mit einem Winkel von 30° - 60° ausgerichtet sind.

6. Trennvorrichtung nach einem der vorhergehenden Ansprüche, **dadurch gekennzeichnet, dass** das Ventil als ein Führungskanal (11) ausgebildet ist, der in einer ersten Position (7') direkt der Produktmulde (2) folgt und in oder über der Entlademulde (8) auslädt, und dass der Führungskanal (11) in der zweiten Position (7") von der Produktmulde (2) weggeschwenkt ist, so dass die Produktmulde über der Sammelmulde auslädt.

7. Trennvorrichtung nach Anspruch 6, **dadurch gekennzeichnet, dass** der Lichtsensor in der Nähe der Stelle positioniert ist, in der die Produktmulde in die Führungsmulde (11) oder Sammelmulde (9) läuft.

8. Trennvorrichtung nach einem der vorhergehenden Ansprüche, **dadurch gekennzeichnet, dass** die Farbe der Trennvorrichtung im Wesentlichen Blau ist.

## Revendications

1. Dispositif de séparation (1) pour séparer les blancs d'oeuf et les jaunes d'oeuf d'oeufs dont la coquille a été retirée, comprenant au moins une rigole pour produit (2) pour le blanc d'oeuf, un système de détection (3) comportant une source de lumière (4) et un capteur de lumière (5) afin de détecter une contamination du blanc d'oeuf dans la rigole pour produit (2), et une valve (7) qui va, en réaction au système de détection (3), et dans une première position (7'), guider le blanc d'oeuf contaminé vers une rigole de déchargement (8), et qui va dans une seconde position (7") guider le blanc d'oeuf non contaminé vers une rigole de recueil (9), dans lequel, pour chaque rigole pour produit (2), le système de détection (3) comporte une source de lumière (4) capable d'émettre une lumière visible tandis que le capteur de lumière (5) est capable de détecter la lumière venant du produit dans la rigole pour produit (2), **caractérisé en ce que** la source de lumière (4) et le capteur de lumière (5) sont disposés en parallèle l'un derrière l'autre, et **en ce que** la source de lumière (4) et le capteur de lumière (5) sont disposés sous la rigole pour produit (2).

2. Dispositif de séparation (1) selon la revendication 1, **caractérisé en ce que** la rigole pour produit comporte une fenêtre qui est transparente à la lumière provenant de la source de lumière (4).

3. Dispositif de séparation (1) selon la revendication 1 ou 2, **caractérisé en ce que** la rigole pour produit est formée de telle manière que, pendant l'utilisation, la fenêtre dans la rigole pour produit supporte continuellement un produit de type blanc d'oeuf.

4. Dispositif de séparation (1) selon l'une quelconque des revendications précédentes, **caractérisé en ce qu'**un dispositif de pulvérisation est disposé au-dessus de la rigole pour produit afin de nettoyer la fenêtre.

5. Dispositif de séparation (1) selon l'une des revendications 1 à 4, **caractérisé en ce que** la source de lumière (4) et le capteur de lumière (5) placé derrière elle sont orientés vers la rigole pour produit selon un angle allant de 30° à 60°.

6. Dispositif de séparation (1) selon l'une quelconque des revendications précédentes, **caractérisé en ce que** la valve est réalisée sous forme d'un canal de guidage (11) qui, dans une première position (7') succède directement à la rigole pour produit (2) et effectue le déchargement dans ou au-dessus de la rigole de déchargement (8), tandis que, dans la seconde position (7"), ledit canal de guidage (11) est basculé et écarté de la rigole pour produit (2) de sorte que la rigole pour produit effectue le déchargement au-dessus de la rigole de recueil.

7. Dispositif de séparation (1) selon la revendication 6, **caractérisé en ce que** le capteur de lumière est placé à proximité de l'endroit où la rigole pour produit donne dans la rigole de guidage (11) ou dans la rigole de recueil (9), respectivement.

8. Dispositif de séparation (1) selon l'une quelconque des revendications précédentes, **caractérisé en ce que** la couleur de celui-ci est essentiellement bleue.
